# EUROPEAN PATENT APPLICATION

(11) **EP 4 733 687 A1**
(43) Date of publication of application: **29.04.2026**
(21) Application number: 24842484.8
(22) Date of filing: 24.06.2024
(51) Int. Cl.: F24S 25/60, F24S 25/63, H02S 20/20, F16B 17/00

(54) **SET OF ELEMENTS FOR INSTALLING PHOTOVOLTAIC PANELS BY MANUALLY POSITIONING A TAB-TYPE CLAMP**

(30) Priority: 18.07.2023 ES 202331316 U
(71) Applicant: Perez Lopez, Benito, 11591 Jerez de la Frontera (Cádiz) (ES)
(72) Inventor: Perez Lopez, Benito, 11591 Jerez de la Frontera (Cádiz) (ES)
(74) Representative: Bartrina Diaz, José María
(86) International application number: PCT/ES2024/070392
(87) International publication number: WO 2025/017223

(57) **Abstract**

The invention relates to a set of elements for installing photovoltaic panels by manually positioning a tab-type clamp, where said elements are intended to interact with each other in order to facilitate the installation of a photovoltaic panel on another previously existing structure. The set of elements consists of a longitudinal profile on which the photovoltaic panel rests, a fastening clamp for fastening the front longitudinal profile to the structure that supports it, and a tab-type clamp.

## Description

### OBJECT OF THE INVENTION

The following invention, as expressed in the wording of the present descriptive specification, relates to a set of elements conceived to interact with each other, for the purpose of facilitating the installation of a photovoltaic panel onto another previously existing structure in a quick and safe manner.

The field of application of the present invention lies within the industry specialised in the manufacture of profiles, specifically to facilitate the execution of photovoltaic, solar-thermal or similar installations.

### BACKGROUND OF THE INVENTION

At present, different types of structures are widely used for supporting and concentrating solar panels to capture solar radiation for the subsequent use of this energy in different fields, since, being a clean type of energy, it is expanding considerably.

As is known, solar panels must be mounted with a specific inclination, varying according to the latitude of the place of installation, in order to make maximum use of solar radiation.

Advancing in the state of existing technology, the following invention has been identified, designated by its publication number and title respectively: ES2350554B1, "Structure for solar panels and assembly procedure".

To fasten said panels, longitudinal profiles are used on which the panels rest. These profiles, usually made of aluminium or galvanised steel, have a vertical plane of symmetry, with a lateral groove on each of their sides so that a clamp or angular piece may be used which, employing screws with hammer-head threading, can be used as an intermediate fastening element to a roof or structure. Additionally, another longitudinal groove is added on its upper surface conceived to contain a clip that is tightened with a screw from above once it contains the edge of the photovoltaic panel inside it, against a nut in the shape of a hammer head that has been positioned inside the groove with no possibility of rotation although with free longitudinal displacement. These clips, even those provided with wings on which the panel is immobilised against the profile, are presented in different forms depending on whether they secure a corner panel or two consecutive panels.

However, the use of such accessories to undertake the fastening of the panel onto roofs, rooftops, or structures in a generalised expansion of photovoltaic installations, where the priority is to do it at the lowest cost, requires a qualification on the part of the installer and, in any case, does not allow it to be done simply and quickly.

That is, when making use of the fastening clamps of the longitudinal profile and fastening clips of the photovoltaic panel to the profile, present in the state of the art, a very large number of different pieces are required which must fit together, without manual movements of natural positioning and locking, but rather adjustments and searches for linearities successively until completion of the installation.

However, the "Set of elements for installing photovoltaic panels by manually positioning a tab-type clamp" provides, with respect to the state of the art in the field, the advantages of greater simplicity and speed in the assembly process, reducing execution times, labour requirements and risks of poor assembly, while increasing the structural strength of the union between the photovoltaic panel and the structure.

### EXPLANATION OF THE INVENTION

By way of explanation of the invention, the "Set of elements for installing photovoltaic panels by manually positioning a tab-type clamp" is based on the combination of the following elements:
A. Longitudinal profile on which the photovoltaic panel rests, configured according to a vertical plane of symmetry, having its lower corners chamfered, as well as two vertical channels conceived for fastening by means of a retaining piece to a structure, plus a groove on its upper face fitted with two widths that favour the retention of a clip with a harpoon-shaped end.
B. Fastening clamp of the aforementioned longitudinal profile to the structure that supports it, according to two angular pieces at 90 degrees in dimensions adapted such that one of them, fixed, fits over one end and the lower part of the previous profile, while the second upper piece, provided with rotational movement with respect to the fixed one, fits over the opposite end of the longitudinal profile and the fixed piece itself in its extension through the lower part, when manually rotated around the longitudinal axis located at the outer end of the fixed piece, until it closes in a harpoon-like manner against it.
C. Flag-type clip according to two superimposed pieces for fastening the photovoltaic panel to the above-mentioned longitudinal profile using a central screw for that purpose, where the lower fixed piece is conceived in size and shape with a harpoon-type end to guarantee a manual locking position inside the aforementioned longitudinal profile, while the upper mobile piece for securing the panel, by means of a hat-shaped crown, contains an element compressed under the tightening of the screw whose lower end favours the adjustment of the harpoon-type termination of the lower fixed piece against the walls of the longitudinal profile that retains it.

### DESCRIPTION OF THE DRAWINGS

To complement the description being provided and in order to assist in a better understanding of the characteristics of the invention, in accordance with a preferred example of practical embodiment thereof, a set of drawings is included as an integral part of said description, in which, in an illustrative but non-limiting manner, the following has been represented:
Figure 1.- Main perspective view of "Set of elements for installing photovoltaic panels by manually positioning a tab-type clamp."
Figure 2.- Main exploded elevation view of "Set of elements for installing photovoltaic panels by manually positioning a tab-type clamp."
Figure 3.- Main elevation view of "Set of elements for installing photovoltaic panels by manually positioning a tab-type clamp" exploded according to the flag-type clip as two superimposed pieces once assembled plus the clamp once closed around the longitudinal profile.
Figure 4.- Main elevation view of "Set of elements for installing photovoltaic panels by manually positioning a tab-type clamp" once assembled, in its maximum tightening position.

In the aforementioned figures, the following constituent elements may be highlighted:
1. Longitudinal profile on which the photovoltaic panel rests.
2. Lower fixed piece that forms the base of the fastening clamp of the above-mentioned longitudinal profile to the structure.
3. Upper piece provided with rotation that forms the closure of the fastening clamp of the above-mentioned longitudinal profile to the structure.
4. Lower fixed piece of the flag-type clip.
5. Upper mobile piece for securing the panel by means of a hat-shaped termination and central tightening screw for that purpose, which closes over the previous piece compressing the intermediate material.

### PREFERRED EMBODIMENT EXAMPLE

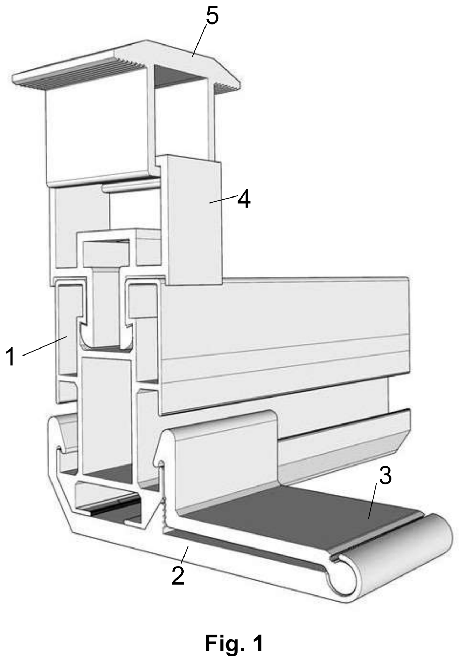

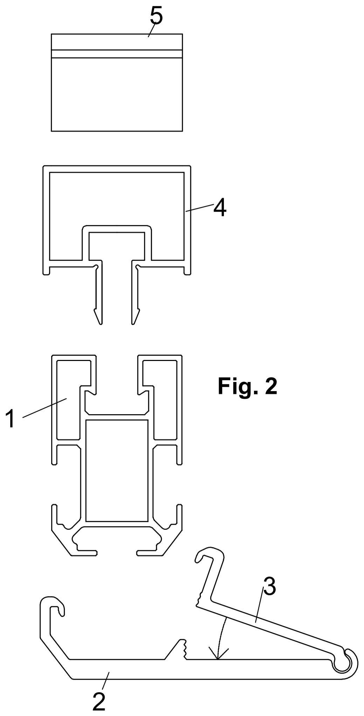

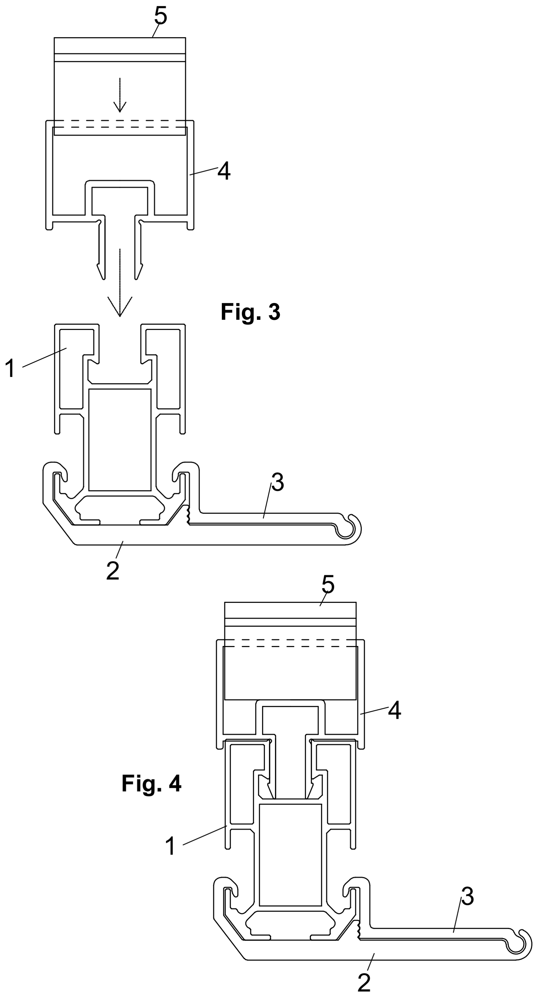

By way of preferred embodiments, the "Set of elements for installing photovoltaic panels by manually positioning a tab-type clamp" may be used for fastening a set of commercial photovoltaic panels on the roof of a single-family dwelling. For this purpose, Figure 1 shows a perspective view of the assembly, where the longitudinal profile on which the photovoltaic panel (1) rests along its entire length is shown partially so that one may appreciate, at its lower end, the relative tightening position on the structure previously arranged on the roof or similar, according to a fastening clamp composed of a lower fixed piece (2) that forms the base of the fastening clamp of the above-mentioned longitudinal profile to the structure, plus another upper piece provided with rotation (3) around the former until closing over it, retaining in the process the lower end of the above-mentioned longitudinal profile (1) as shown in Figures 2-3. Evidently, the fastening of the assembly that forms the fastening clamp (2-3) to the other pre-existing structure in the tightening position of Figure 3 is undertaken by making use of the corresponding standardised fastening screw to be inserted through a hole for that purpose, as shown in Figure 1.

Continuing with the description, in the upper part of Figures 1-5, the flag-type clip is also shown according to a lower fixed piece (4) with an end adapted so that it fits and locks onto the longitudinal profile (1), plus an upper piece (5) for securing the panel by means of a hat-shaped termination and central tightening screw for that purpose, which closes over the previous piece (4) compressing the intermediate material up to the position of Figure 4. To facilitate visualization of the remaining elements, the compression sponge that is placed over the drilled hole of the lower fixed piece (4) without covering it, with the purpose of maintaining a position without external force of the upper mobile piece (5) over the lower fixed piece (4) as shown in Figure 3, is not shown in Figure 1.

For further clarification, in a position, once assembled as shown in Figure 4, there would also be a through screw of the assembly of the flag-type clip which would be inserted through the crown of the upper piece (5) according to the drilled hole for that purpose, then continuing through the drilling on the lower piece (4) as shown in Figure 1, in a maximum tightening position in which the upper mobile piece (5) has moved by the tightening inside the lower fixed piece (4) compressing the sponge and even, with the termination of the screw in its contact with the lower piece in its flag-shaped termination, favouring the opening of the latter, increasing the structural solidity of the union and of its assembly.

Finally, the assembly can be undertaken by first fastening the longitudinal profile (1) on which the photovoltaic panel rests to the structure, making use of the fastening clamp (2-3). Next, the panels are placed with the flag-type clips previously assembled (5-4) as shown in Figure 3, for their manual perpendicular insertion to the panel up to a locking position. Then, the flag-type clips may be tightened against the longitudinal profile up to a maximum tightening position as shown in Figure 4, making use of the aforementioned through screw for that purpose.

It is not considered necessary to make this description any more extensive for any expert in the field to understand the scope of the invention and the advantages derived therefrom in its different applications adapted to photovoltaic installation, solar thermal installation, or similar installation for which it is used, regardless of its size, whether it be on the ground, on the roof of an industrial building, or on a rooftop, making use of an intermediate metallic structure, concrete structure or any other market solution.

Likewise, the different materials used to undertake the manufacture of the different described elements, designs, shapes, dimensions and/or elements used to guarantee the union of the elements that form the flag-type clip by compression, shall be subject to variation as long as this does not imply an alteration in the essential nature of the invention. The terms in which this specification has been described are to be understood in a broad and non-limiting sense.

## Claims

1. Set of elements for installing photovoltaic panels by manually positioning a tab-type clamp, **characterised by** containing the following elements:
A. Longitudinal profile (1) on which the photovoltaic panel rests, configured according to a vertical plane of symmetry, with both lower corners chamfered, as well as two vertical grooves conceived for fastening by means of a retaining piece to a structure, plus a groove on its upper face provided with two widths that favour the retention of a clip with a harpoon-shaped termination.
B. Fastening clamp of the aforementioned longitudinal profile (1) to the structure that supports it, according to two angular pieces at 90 degrees in dimensions adapted so that one of them, fixed (2), fits over one end and the lower part of the aforementioned profile (1), while the second upper piece (3), provided with rotational movement with respect to the fixed one (2), fits over the opposite end of the longitudinal profile (1) and the fixed piece (2) itself in its extension along the lower part, when manually rotated around the longitudinal axis located at the outer end of the fixed piece (2), until its harpoon-like closure against it.
C. Flag-type clip according to two superimposed pieces for fastening the photovoltaic panel to the aforementioned longitudinal profile (1), making use of a central screw for that purpose, where the lower fixed piece (4) has been conceived in size and shape with a harpoon-type termination to guarantee a manual locking position inside the aforementioned longitudinal profile (1), while the upper mobile piece (5) for securing the panel by means of a hat-shaped crown contains an element compressed under the tightening of the screw whose lower end favours the adjustment of the harpoon-type termination of the lower fixed piece (4) against the walls of the longitudinal profile (1) that retains it.
